# EUROPEAN PATENT APPLICATION

(11) **EP 4 456 404 A1**
(43) Date of publication of application: **30.10.2024**
(21) Application number: 22910472.4
(22) Date of filing: 12.09.2022
(51) Int. Cl.: H02M 7/48, B60K 1/04, B60L 9/18, B60L 50/60

(54) **ELECTRIC WORK VEHICLE**

(30) Priority: 24.12.2021 JP 2021211646; 24.12.2021 JP 2021211647
(71) Applicant: Kubota Corporation, Osaka-shi, Osaka 556-8601 (JP)
(72) Inventor: MATSUMOTO, Ryunosuke, Sakai-shi, Osaka 590-0823 (JP); OKAZAKI, Kazuto, Sakai-shi, Osaka 590-0823 (JP); KAWABATA, Shinichi, Sakai-shi, Osaka 590-0823 (JP)
(74) Representative: Müller-Boré & Partner Patentanwälte PartG mbB
(86) International application number: PCT/JP2022/034024
(87) International publication number: WO 2023/119746

(57) **Abstract**

An electric work vehicle includes: a body; a travel device configured to cause the body to travel; an operation mechanism configured to transmit power to a work device; a motor (M) configured to rotate at least one of the travel device and the operation mechanism; a battery (4) configured to supply electric power to the motor (M); an inverter (14) configured to convert a direct current from the battery (4) into an alternating current and supply the alternating current to the motor (M); and an electrically-conductive cable (21) electrically connected to the inverter (14) and the motor (M) to provide the alternating current to the motor (M). The inverter 14 includes a case 14A containing an inverter module, and a first connector (14C) projecting outwardly from a surface portion of the case (14A) and electrically connected to the electrically-conductive cable (21). The first connector (14C) is provided on the surface portion of the case (14A) which surface portion is on an opposite side to a side where the battery (4) is placed, in such a manner as to project toward the opposite side.

## Description

### Technical Field

The present invention relates to an electric work vehicle.

### Background Art

An electric work vehicle disclosed in Japanese Unexamined Patent Application Publication No. 2021-000957 includes an inverter, for example. The inverter is configured to convert direct-current power from a battery into alternating-current power and supplies the alternating-current power to a motor.

### Citation List

### Patent Literature

Patent Literature 1: Japanese Unexamined Patent Application Publication No. 2021-000957

### Summary of Invention

### Technical Problem

As described in Japanese Unexamined Patent Application Publication No. 2021-000957, a configuration in which the battery and the inverter are adjacent to each other can easily shorten an electrically-conductive cable for supplying electric power from the battery to the inverter. In the meantime, it is also conceivable that wiring is congested in a connection opening on the inverter side of the electrically-conductive cable extending from the battery to the inverter. In view of this, it is desirable that an electrically-conductive cable for supplying electric power from the inverter to the motor be routable efficiently while the wiring congestion is avoided as much as possible. A first object of the present invention is to provide an electric work vehicle including an electrically-conductive cable extending over an inverter and a motor which electrically-conductive cable can be routed efficiently.

When electric power is supplied from the battery to the motor via the inverter, a large current flows through the motor. Accordingly, the large current also flows through the electrically-conductive cable electrically connected to the battery and the inverter and the electrically-conductive cable electrically connected to the inverter and the motor. From this, it is necessary that these electrically-conductive cables be connected firmly so that the electrically-conductive cables are not pulled off from the inverter. A second object of the present invention is to provide an electric work vehicle including an electrically-conductive cable electrically connected to an inverter firmly.

### Solution to Problem

An electric work vehicle of the present invention to achieve the first object includes: a body; a travel device configured to cause the body to travel; an operation mechanism configured to transmit power to a work device; a motor configured to rotate at least one of the travel device and the operation mechanism; a battery configured to supply electric power to the motor; an inverter configured to convert a direct current from the battery into an alternating current and supply the alternating current to the motor; and an electrically-conductive cable electrically connected to the inverter and the motor to provide the alternating current to the motor. The inverter includes an inverter module configured to convert the direct current into the alternating current, a case containing the inverter module, and a first connector projecting outwardly from a surface portion of the case and electrically connected to the electrically-conductive cable. The battery and the inverter are adjacent to each other, and the first connector is provided on the surface portion of the case which surface portion is on an opposite side to a side where the battery is placed, in such a manner as to project toward the opposite side.

In the present invention, when the electrically-conductive cable is connected to the first connector, the inverter is electrically connected to the motor, and the first connector is provided on the surface portion on the opposite side to the side where the battery is placed, in such a manner to project toward the opposite side. In the configuration where the battery and the inverter are adjacent to each other, such a possibility is conceivable that wiring or the like from the battery is congested in a region where the inverter faces the side where the battery is placed. Accordingly, in comparison with a configuration where the first connector is disposed in a region near the side where the battery is placed, a configuration to freely route the electrically-conductive cable while avoiding the congestion is easily achieved. Hereby, an electric work vehicle including an electrically-conductive cable extending over an inverter and a motor which electrically-conductive cable can be routed efficiently is achieved.

In the present invention to achieve the first object, it is preferable that the inverter and the motor be adjacent to each other, and the first connector be placed on a region of the case which region is opposite to a side where the motor is placed.

It is conceivable that a large current flows through the electrically-conductive cable extending over the inverter and the motor. Accordingly, the electrically-conductive cable tends to have a diameter larger than that of a general distribution cable, and it is also conceivable that the electrically-conductive cable is hard to bend. In this configuration, the first connector is provided at a position distanced from the motor as much as possible. Accordingly, even when the diameter of the electrically-conductive cable is large, the electrically-conductive cable is gently bent and connected to the inverter and the motor.

In the present invention to achieve the first object, it is preferable that the motor include a second connector connected to the electrically-conductive cable, and the first connector and the second connector be disposed to face each other.

With this configuration, the electrically-conductive cable is easily connected to the inverter and the motor.

In the present invention to achieve the first object, it is preferable that the inverter and the motor be aligned along a front-rear direction of the body, the first connector and the second connector be disposed at respective positions displaced from each other in a right-left direction when the body is viewed in the front-rear direction, and the first connector be provided to be inclined from the front-rear direction of the body toward a side where the second connector is placed.

With this configuration, even when the first connector and the second connector are not aligned strictly, the electrically-conductive cable is easily connected to the inverter and the motor.

In the present invention to achieve the first object, it is preferable that the body include right and left body frames extending in the front-rear direction, the battery be right above the inverter and supported on the right and left body frames, the motor and the inverter be aligned along the front-rear direction of the body between the right and left body frames in such a manner as to be supported on the right and left body frames, and the electrically-conductive cable be stored in a space between the right and left body frames.

In this configuration, the electrically-conductive cable is stored in the space between the right and left body frames. Accordingly, the space between the right and left body frames is effectively utilized. Since the body frames are provided on the right side and the left side of the electrically-conductive cable, it is difficult for the electrically-conductive cable to come into contact with a foreign substance.

In the present invention to achieve the first object, it is preferable that the inverter be supported on the right and left body frames in such a manner as to be attachable to and detachable from the right and left body frames.

This configuration improves the maintenance performance of the inverter in comparison with a configuration where the inverter cannot be freely attached to or detached from the right and left body frames.

In the present invention to achieve the first object, it is preferable that the body include a lateral frame connecting the right and left body frames to each other, and the electrically-conductive cable be placed above the lateral frame.

In this configuration, the electrically-conductive cable is contained in the space surrounded by the right and left body frames and the lateral frame, thereby making it further difficult for the electrically-conductive cable to come into contact with a foreign substance.

In the present invention to achieve the first object, it is preferable that the inverter be placed in front of the motor, the lateral frame be connected to respective lower portions of the right and left body frames, and the lateral frame extend in the front-rear direction from a region corresponding to a front end portion of the inverter to a region corresponding to a front end portion of the motor in a plan view.

In this configuration, the lateral frame is provided over a region corresponding to the electrically-conductive cable, thereby making it further difficult for the electrically-conductive cable to come into contact with a foreign substance.

An electric work vehicle of the present invention to achieve the second object includes: a body; a travel device configured to cause the body to travel; an operation mechanism configured to transmit power to a work device; a motor configured to rotate at least one of the travel device and the operation mechanism; a battery configured to supply electric power to the motor; an inverter configured to convert a direct current from the battery into an alternating current and supply the alternating current to the motor; a first electrically-conductive cable electrically connected to the battery and the inverter to provide the direct current to the inverter; and a second electrically-conductive cable electrically connected to the inverter and the motor to provide the alternating current to the motor. The inverter includes a third connector electrically connected to the first electrically-conductive cable, an inverter module configured to convert the direct current into the alternating current, and a first connector electrically connected to the second electrically-conductive cable. At least one of the third connector and a connection opening of the first electrically-conductive cable includes a first locking mechanism configured to maintain connection between the third connector and the first electrically-conductive cable, and at least one of the first connector and a connection opening of the second electrically-conductive cable includes a second locking mechanism configured to maintain connection between the first connector and the second electrically-conductive cable.

In the present invention, the connection opening of the first electrically-conductive cable and the third connector serve as a connection portion between the inverter and the first electrically-conductive cable, and the connection opening of the second electrically-conductive cable and the first connector serve as a connection portion between the inverter and the second electrically-conductive cable. Since each of the connection portions includes the first locking mechanism or the second locking mechanism, the first electrically-conductive cable and the second electrically-conductive cable are each firmly connected to the inverter so as not to be pulled off from the inverter. Hereby, an electric work vehicle including an electrically-conductive cable electrically connected to an inverter firmly is achieved.

In the present invention to achieve the second object, it is preferable that: the first locking mechanism include a first rotation mechanism provided in one of the third connector and the connection opening of the first electrically-conductive cable and configured to rotate between an engaged position at which the third connector is engaged with the connection opening of the first electrically-conductive cable and a disengaged position at which the third connector is disengaged from the connection opening of the first electrically-conductive cable, and a first slide mechanism configured to slide between a holding position at which the first rotation mechanism is held at the engaged position and a non-holding position at which the first rotation mechanism is not held at the engaged position; and the second locking mechanism include a second rotation mechanism provided in one of the first connector and the connection opening of the second electrically-conductive cable and configured to rotate between an engaged position at which the first connector is engaged with the connection opening of the second electrically-conductive cable and a disengaged position at which the first connector is disengaged from the connection opening of the second electrically-conductive cable, and a second slide mechanism configured to slide between a holding position at which the second rotation mechanism is held at the engaged position and a non-holding position at which the second rotation mechanism is not held at the engaged position.

In this configuration, the first rotation mechanism and the second rotation mechanism are each configured to engage an electrically-conductive cable (including the first electrically-conductive cable and the second electrically-conductive cable) with a connector (including the third connector and the first connector) of the inverter. When each of the first rotation mechanism and the second rotation mechanism is at the engaged position, the electrically-conductive cable and the connector of the inverter are maintained to be engaged. In the meantime, the first slide mechanism is configured to hold the first rotation mechanism at the engaged position, and the second slide mechanism is configured to hold the second rotation mechanism at the engaged position. Thus, the first locking mechanism and the second locking mechanism are locked doubly. This further avoids such a risk that the first electrically-conductive cable and the second electrically-conductive cable are pulled off from the inverter.

In the present invention to achieve the second object, it is preferable that the inverter and the motor be aligned along a front-rear direction of the body, the motor include a second connector connected to the second electrically-conductive cable, the first connector and the second connector be disposed to face each other at respective positions displaced from each other in a right-left direction when the body is viewed in the front-rear direction, and the first connector be provided to be inclined from the front-rear direction of the body toward a side where the second connector is placed.

With this configuration, even when the first connector and the second connector are not aligned strictly, the second electrically-conductive cable is easily connected to the inverter and the motor.

In the present invention to achieve the second object, it is preferable that the inverter include a first conductive section including a plurality of bus bars via which the direct current flows from the third connector to the inverter module, a second conductive section including a plurality of bus bars via which the alternating current flows from the inverter module to the first connector, and a vibration isolator configured to restrain vibration of the plurality of bus bars of each of the first conductive section and the second conductive section.

For example, when resonance occurs in a bus bar in the first conductive section or the second conductive section, there is such a risk that a central region of the bus bar in its longitudinal direction vibrates more largely than the opposite ends thereof to loosen a bolt or the like. In this configuration, each of the first conductive section and the second conductive section includes the vibration isolator. This avoids such a risk that the bus bar vibrates excessively even in a case where resonance occurs in a bus bar of the first conductive section or the second conductive section.

In the present invention to achieve the second object, it is preferable that the vibration isolator be made of a non-conductive insulator.

With this configuration, the vibration isolate is easily disposed in each of the first conductive section and the second conductive section.

In the present invention to achieve the second object, it is preferable that the vibration isolator include a plurality of grooves allowing the vibration isolator to sandwich the plurality of bus bars.

With this configuration, the plurality of bus bars is supported firmly by the vibration isolator, thereby restraining the bus bars from vibrating.

In the present invention to achieve the second object, it is preferable that the vibration isolator include two bar-shaped bodies configured to collectively sandwich the plurality of bus bars.

With this configuration, the plurality of bus bars is supported firmly by the two bar-shaped bodies, thereby restraining the bus bars from vibrating.

### Brief Description of Drawings

FIG. 1 is a left side view of a tractor;
FIG. 2 is a left side view illustrating the arrangement of an inverter and so on;
FIG. 3 is a view illustrating the flow of power transmission;
FIG. 4 is a view illustrating a section of a body frame to illustrate wiring around the inverter;
FIG. 5 is a view illustrating a section of a body frame to illustrate wiring around the inverter;
FIG. 6 is a view illustrating the inside of the inverter and an area around the inverter;
FIG. 7 is a view illustrating a lock mechanism for wiring to the inverter.
FIG. 8 is a view illustrating the lock mechanism for wiring to the inverter.
FIG. 9 is a view illustrating the lock mechanism for wiring to the inverter.
FIG. 10 is a view illustrating a vibration isolator for a first conductive section; and
FIG. 11 is a view illustrating a vibration isolator for a second conductive section.

### Description of Embodiments

An embodiment to carry out the present invention will be described with reference to the drawings. In the following description, a direction of an arrow "F" in the drawings indicates "forward," a direction of an arrow "B" indicates "rearward," a direction of an arrow "L" indicates "left," and a direction of an arrow R indicates "right," unless otherwise specified. Further, in the drawings, a direction of an arrow "U" indicates "upward," and a direction of an arrow "D" indicates "downward."

### [Overall Configuration of Tractor]

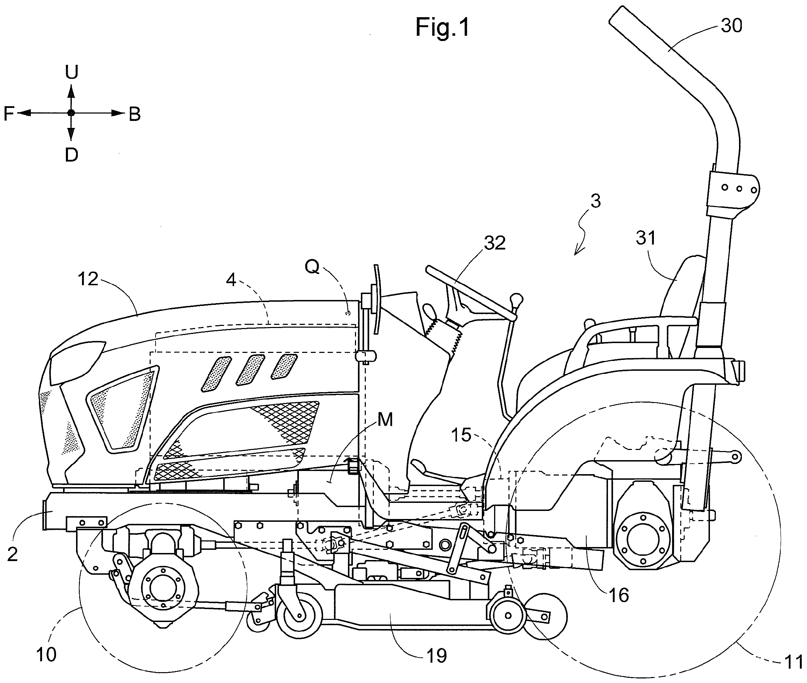

The following describes a tractor of the present embodiment. As illustrated in FIG. 1, the tractor includes right and left front wheels 10, right and left rear wheels 11, and a cover member 12.

Further, the tractor includes a body frame 2 and a driving section 3. The body frame 2 is supported on the right and left front wheels 10 and the right and left rear wheels 11.

The cover member 12 is disposed in a body front portion. The driving section 3 is provided behind the cover member 12. In other words, the cover member 12 is disposed in front of the driving section 3.

The driving section 3 includes a protection frame 30, a driver seat 31, and a steering wheel 32. An operator can be seated on the driver seat 31. This allows the operator to get in the driving section 3. The right and left front wheels 10 are steered by the operation of the steering wheel 32. The operator can perform various driving operations in the driving section 3.

The tractor includes a drive battery 4. The cover member 12 is configured to be swingable around an opening-closing axis Q along the left-right direction of a body. Hereby, the cover member 12 is configured to be openable and closable. When the cover member 12 is a closed, the drive battery 4 is covered with the cover member 12.

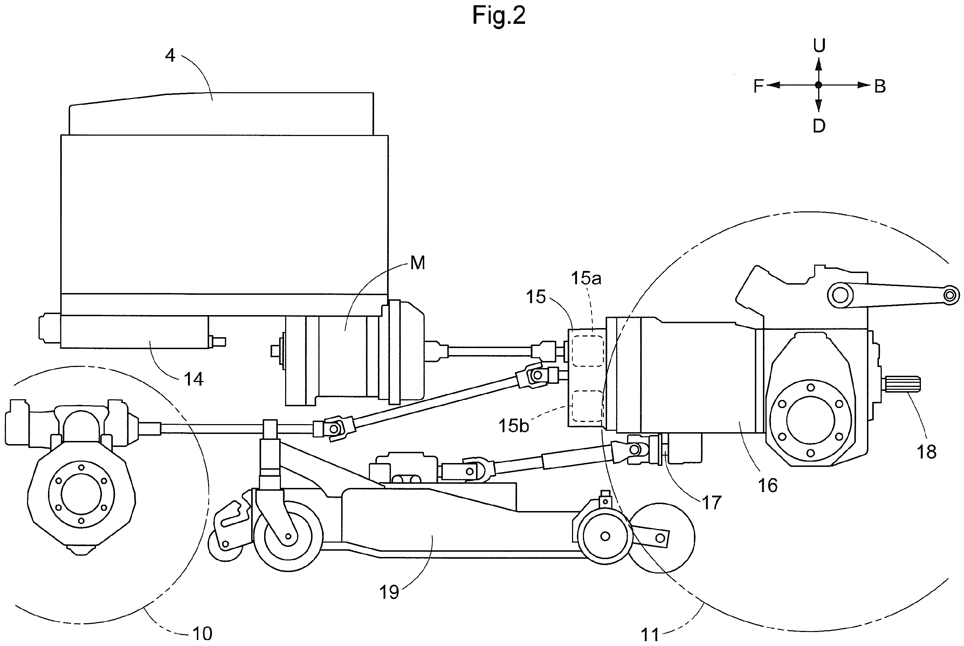

As illustrated in FIG. 2, the tractor includes an inverter 14 and a motor M. The drive battery 4 supplies electric power to the inverter 14. The inverter 14 converts direct-current power from the drive battery 4 into alternating-current power and supplies the alternating-current power to the motor M. The motor M is driven by the alternating-current power supplied from the inverter 14.

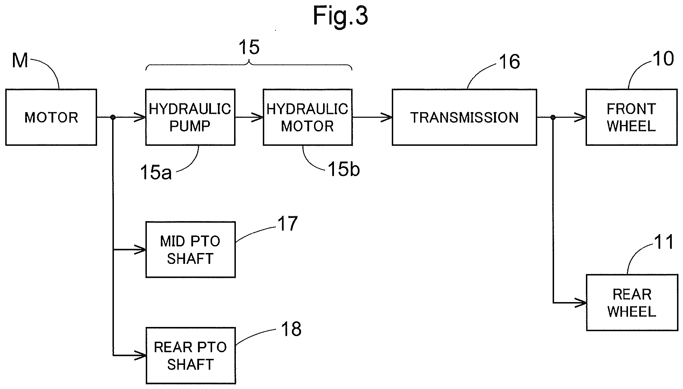

As illustrated in FIGS. 2, 3, the tractor includes a hydrostatic continuously variable transmission 15 and a transmission 16. As illustrated in FIG. 3, the hydrostatic continuously variable transmission 15 includes a hydraulic pump 15a and a hydraulic motor 15b.

The hydraulic pump 15a is driven by rotational power from the motor M. When the hydraulic pump 15a is driven, rotational power is output from the hydraulic motor 15b. Note that the hydrostatic continuously variable transmission 15 is configured to shift the rotational power between the hydraulic pump 15a and the hydraulic motor 15b. The hydrostatic continuously variable transmission 15 is also configured to continuously vary a gear ratio.

The rotational power output from the hydraulic motor 15b is transmitted to the transmission 16. The rotational power transmitted to the transmission 16 is shifted by a gear transmission mechanism of the transmission 16 and distributed to the right and left front wheels 10 and the right and left rear wheels 11. Hereby, the right and left front wheels 10 and the right and left rear wheels 11 are driven.

Further, as illustrated in FIGS. 2, 3, the tractor includes a middle PTO shaft 17 and a rear PTO shaft 18. The rotational power output from the motor M is distributed to the hydraulic pump 15a, the middle PTO shaft 17, and the rear PTO shaft 18. Hereby, the middle PTO shaft 17 and the rear PTO shaft 18 rotate.

When a work device is connected to the middle PTO shaft 17 or the rear PTO shaft 18, the work device is driven by the rotational power from the middle PTO shaft 17 or the rear PTO shaft 18. For example, as illustrated in FIG. 2, in the present embodiment, a mowing device 19 is connected to the middle PTO shaft 17. The mowing device 19 is driven by the rotational power from the middle PTO shaft 17.

The middle PTO shaft 17 and the rear PTO shaft 18 correspond to an "operation mechanism" of the present invention. The mowing device 19 corresponds to a "work device" of the present invention. The right and left front wheels 10 and the right and left rear wheels 11 correspond to a "travel device" of the present invention.

### [Inverter and Wiring around Inverter]

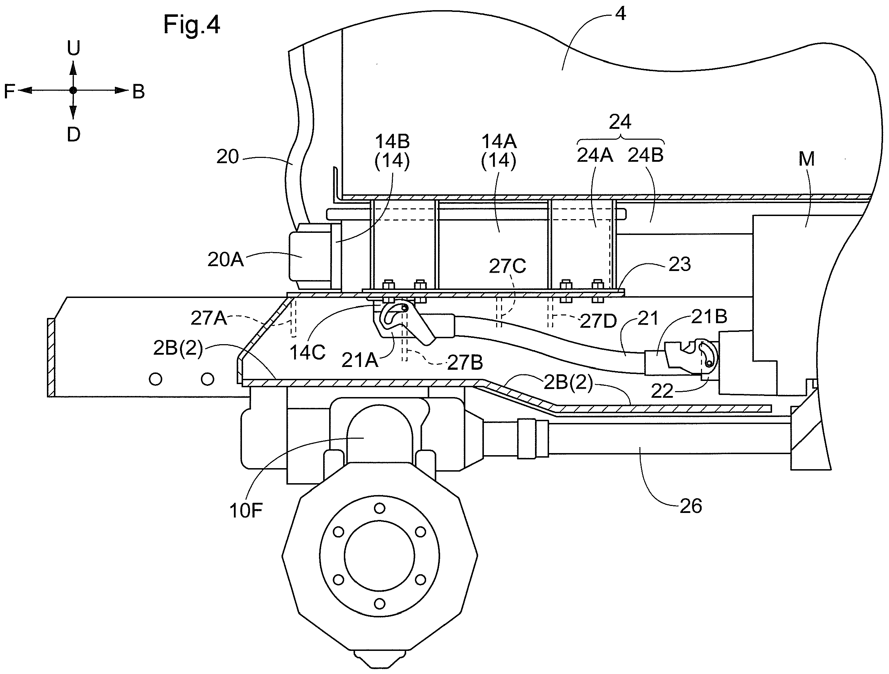

The inverter 14 of the present embodiment and wiring around the inverter 14 will be described based on FIGS. 4 to 6. The inverter 14 converts a direct current from the drive battery 4 into an alternating current and supplies the alternating current to the motor M.

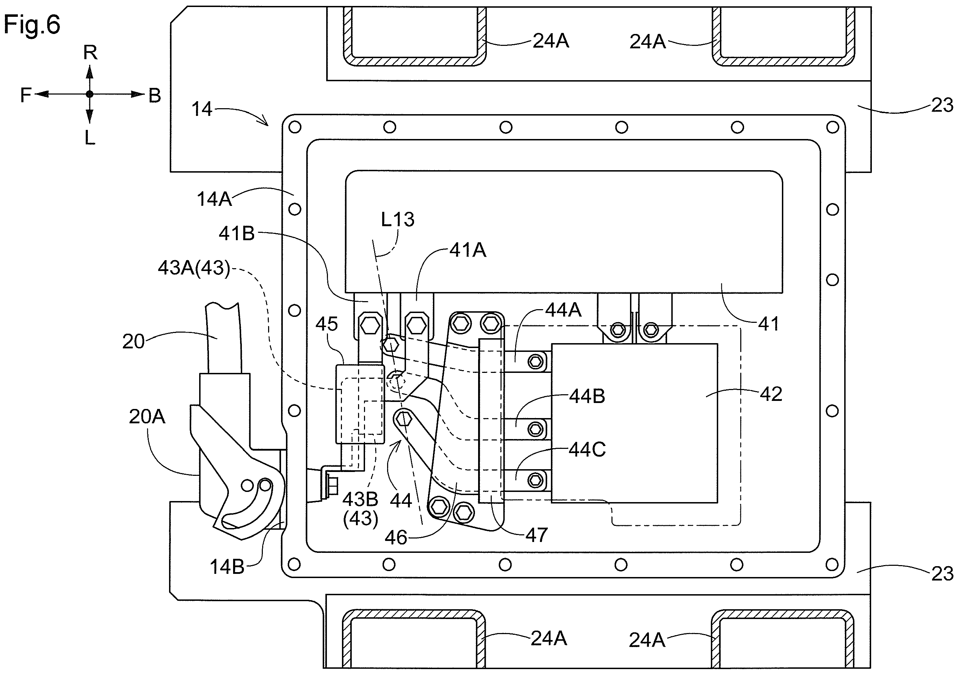

As illustrated in FIG. 6, the inverter 14 includes a capacitor 41 and an inverter module 42. The capacitor 41 is electrically connected to the inverter module 42. The inverter module 42 is a circuit body for converting a direct current from the drive battery 4 into an alternating current and is an insulated-gate bipolar transistor (IGBT), for example. The capacitor 41 maintains a supply voltage to the inverter module 42 to be constant. The inverter 14 includes a case 14A, and the capacitor 41 and the inverter module 42 are stored in the case 14A. The case 14A is made by die casting of aluminum.

The drive battery 4 is electrically connected to the inverter 14 via a power cable 20. A direct current flows through the power cable 20. As illustrated in FIGS. 4, 6, the inverter 14 includes an input connector 14B, and the input connector 14B projects forward of a front surface portion of the case 14A and is electrically connected to a connection opening 20A of the power cable 20.

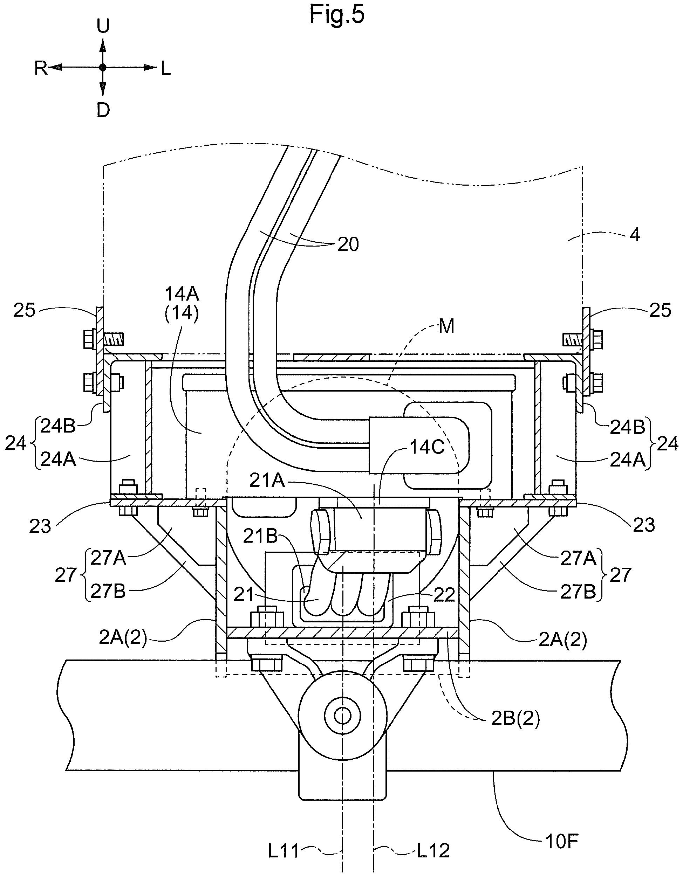

As illustrated in FIGS. 4, 5, the inverter 14 is electrically connected to the motor M via a feeder cable 21. A three-phase alternating current flows through the feeder cable 21. In other words, the feeder cable 21 is electrically connected to the inverter 14 and the motor M and provides an alternating current to the motor M. The inverter 14 includes an output connector 14C, and the output connector 14C projects downward of a bottom surface portion of the case 14A and is electrically connected to a connection opening 21A of the feeder cable 21. The motor M includes a power receiving connector 22, and the power receiving connector 22 is electrically connected to a connection opening 21B of the feeder cable 21.

Further, as illustrated in FIG. 6, the inverter 14 includes a first conductive section 43 and a second conductive section 44. The first conductive section 43 includes two bus bars 43A, 43B for providing a direct current from the input connector 14B to the capacitor 41. The second conductive section 44 includes three bus bars 44A, 44B, 44C for providing an alternating current from the inverter module 42 to the output connector 14C. Alternating currents of three phases U, V, W flow through the three second bus bar 44A, 44B, 44C of the conductive section 44, respectively. A clamp-type current sensor 47 is disposed in central portions in the three bus bars 44A, 44B, 44C in their longitudinal direction.

Thus, the inverter 14 includes the input connector 14B electrically connected to the power cable 20, the inverter module 42 configured to convert a direct current into an alternating current, and the output connector 14C electrically connected to the feeder cable 21.

The input connector 14B corresponds to a "third connector" of the present invention. The output connector 14C corresponds to a "first connector" of the present invention. The power receiving connector 22 corresponds to a "second connector" of the present invention. The power cable 20 corresponds to a "first electrically-conductive cable" of the present invention. The feeder cable 21 corresponds to a "second electrically-conductive cable" of the present invention.

As illustrated in FIGS. 4, 5, the body frame 2 includes right and left front-rear frames 2A and a lateral frame 2B. The right and left front-rear frames 2A extend along the front-rear direction of the body, and the lateral frame 2B connects the right and left front-rear frames 2A to each other. The lateral frame 2B is disposed in the bottom of the right and left front-rear frames 2A and connected to the right and left front-rear frames 2A. The lateral frame 2B also extends in the front-rear direction from a region corresponding to a front end portion of the inverter 14 to a region corresponding to a front end portion of the motor M in a plan view. The right and left front-rear frames 2A correspond to "right and left body frames" of the present invention.

The lateral frame 2B is connected to an axle unit 10F, and the axle unit 10F extends in the right-left direction of the body. The front wheels 10 are supported on right and left ends of the axle unit 10F in such a manner as to be rotatable. Further, a propeller shaft 26 is connected to the transmission 16 and the axle unit 10F, and the propeller shaft 26 extends in the front-rear direction of the body below the lateral frame 2B.

The inverter 14 and the motor M are disposed to be adjacent to each other in the front-rear direction. In other words, the inverter 14 and the motor M are disposed to be aligned with each other along the front-rear direction of the body. The motor M and the inverter 14 are aligned along the front-rear direction of the body between the right and left front-rear frames 2A in such a manner as to be supported on the right and left front-rear frames 2A. The inverter 14 is placed in front of the motor M.

The output connector 14C and the power receiving connector 22 are disposed to face each other. The output connector 14C is provided to be disposed in a region of the case 14A which region is opposite to a side where the motor M is placed. The feeder cable 21 is disposed above the lateral frame 2B and stored in a space between the right and left front-rear frames 2A. That is, the feeder cable 21 is extended in the front-rear direction in a space surrounded by the right and left front-rear frames 2A, the lateral frame 2B, and the bottom surface portion of the case 14A. This can avoid such a risk that the output connector 14C and the feeder cable 21 come into contact with a foreign substance, thereby making it possible to reduce such a risk that the output connector 14C and the feeder cable 21 are detached from each other by contact with the foreign substance.

As illustrated in FIG. 5, a line L11 indicative of the center of each of the connection opening 21B and the power receiving connector 22 in the right-left direction and a line L12 indicative of the center of each of the connection opening 21A and the output connector 14C in the right-left direction are displaced from each other in the right-left direction. That is, the output connector 14C and the power receiving connector 22 are disposed to face each other and to be displaced from each other in the right-left direction when the body is viewed in the front-rear direction. On this account, the output connector 14C is provided to be inclined from the front-rear direction of the body toward a side where the power receiving connector 22 is placed.

As illustrated in FIG. 6, the three bus bars 44A, 44B, 44C in the second conductive section 44 are disposed at regular intervals or at generally regular intervals such that the three bus bars 44A, 44B, 44C are arranged on a line L13. The line L13 is inclined from the lateral direction of the body. This can achieve a configuration in which the output connector 14C is inclined toward the side where the power receiving connector 22 is placed.

The drive battery 4 is placed right above the inverter 14 and supported on the right and left front-rear frames 2A. More specifically, as illustrated in FIGS. 4 to 6, right and left support surface portions 23 are formed in respective upper end portions of the right and left front-rear frames 2A. Mounting table frames 24 are put on the right and left support surface portions 23, and the drive battery 4 is put on the mounting table frames 24.

The right and left support surface portions 23 extend in the lateral direction of the body, in the respective upper end portions of the right and left front-rear frames 2A. Note that, as illustrated in FIGS. 4, 5, triangle ribs 27A, 27B, 27C, 27D are provided over the support surface portions 23 and the front-rear frames 2A such that the support surface portions 23 are reinforced by the triangle ribs 27A, 27B, 27C, 27D, in such a manner as to prevent the right and left support surface portions 23 from curving relative to the right and left front-rear frames 2A. The inverter 14 has a bottom portion connected to the support surface portions 23 by bolt. Thus, the inverter 14 is detachably supported on the right and left front-rear frames 2A.

The mounting table frames 24 are connected to the right and left support surface portions 23 by bolt. As illustrated in FIGS. 4, 6, the mounting table frames 24 are members obtained by combining C-shaped-steel longitudinal frames 24A provided on the right and left support surface portions 23 in a standing manner, right and left angle steel materials 24B disposed on respective upper end portions of the right and left longitudinal frames 24A to extend in the front-rear direction of the body, and lateral angle steel materials (not illustrated) connecting the right and left angle steel materials 24B extending in the front-rear direction of the body to each other. The mounting table frames 24 are formed in a C-shape when the body is viewed in the front-rear direction. The mounting table frames 24 cover the inverter 14 from above and from lateral sides in the right-left direction.

Right and left side portions of respective upper portions of the angle steel materials 24B are connected to respective lower portions of connecting plates 25 by bolt. Right and left side portions of a lower portion of the drive battery 4 are connected to respective upper portions of the connecting plates 25 by bolt. Hereby, the inverter 14 is connected to the mounting table frames 24 via the connecting plates 25.

The drive battery 4 and the inverter 14 are disposed to be adjacent to each other in the up-down direction. Thus, the output connector 14C is provided on a surface portion of the case 14A which surface portion is on an opposite side to a side where the drive battery 4 is placed, in such a manner as to project toward the opposite side.

### [Lock Mechanism of Wiring for Inverter]

In the present embodiment, the connection opening 20A of the power cable 20 and the connection opening 21A of the feeder cable 21 each include a rotation member 35 and a slide member 36 as a locking mechanism. The rotation member 35 has an arcuate elongate hole 35h. The elongate hole 35h receives a projecting locking portion 37. The projecting locking portion 37 is formed in each of the input connector 14B and the output connector 14C in the inverter 14 so as to project outwardly from a connector body.

The rotation member 35 and the slide member 36 in the connection opening 20A of the power cable 20 correspond to a "first locking mechanism" of the present invention, and the rotation member 35 and the slide member 36 in the connection opening 21A of the feeder cable 21 correspond to a "second locking mechanism" of the present invention. In the connection opening 20A of the power cable 20, the rotation member 35 corresponds to a "first rotation mechanism" of the present invention, and the slide member 36 corresponds to a "first slide mechanism." In the connection opening 21A of the feeder cable 21, the rotation member 35 corresponds to a "second rotation mechanism" of the present invention, and the slide member 36 corresponds to a "second slide mechanism."

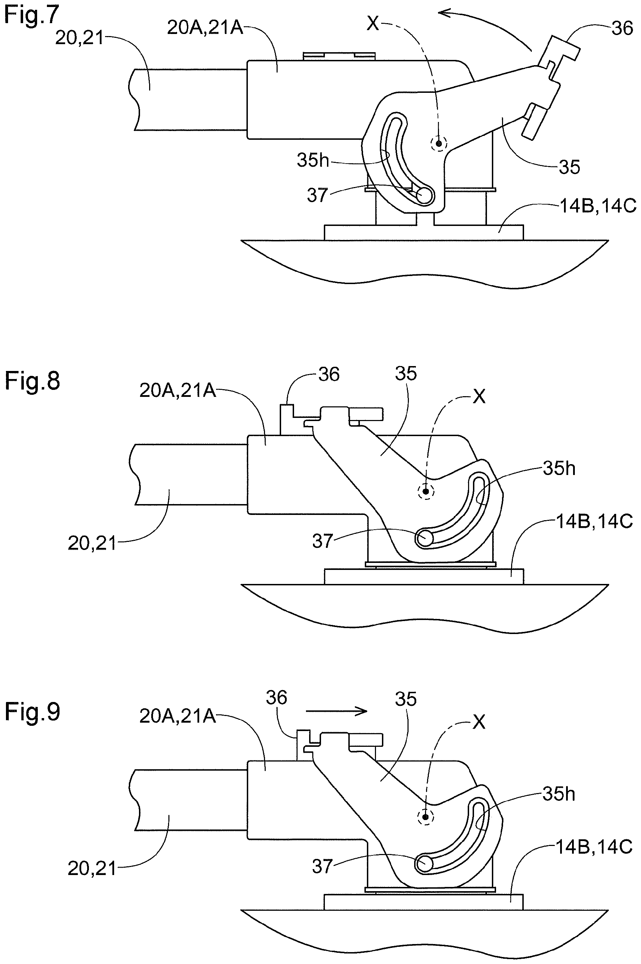

As illustrated in FIGS. 7, 8, the rotation member 35 is rotatable around an axis X. FIG. 7 illustrates the connection opening 20A not engaged with the input connector 14B or the connection opening 21A not engaged with the output connector 14C. The state of the rotation member 35 at this time is referred to as a "disengaged position." When the rotation member 35 is placed at the disengaged position, the projecting locking portion 37 can be pulled out of the elongate hole 35h.

FIG. 8 illustrates the connection opening 20A engaged with the input connector 14B or the connection opening 21A engaged with the output connector 14C. The state of the rotation member 35 at this time is referred to as an "engaged position." When an operator rotates the rotation member 35 in a direction of an arrow in FIG. 7, the rotation member 35 is changed from the disengaged position to the engaged position.

One end portion of the elongate hole 35h is formed closer to the axis X than the other end portion of the elongate hole 35h. The elongate hole 35h is formed such that a side where the one end portion is placed is closer to the axis X. Accordingly, when the rotation member 35 rotates toward the engaged position, the projecting locking portion 37 slides inside the elongate hole 35h toward the one end portion, so that the connection opening 20A and the input connector 14B (or the connection opening 21A and the output connector 14C) come close to each other to be firmly connected to each other.

When the operator rotates the rotation member 35 in a direction opposite to the direction of the arrow in FIG. 7, the rotation member 35 is changed from the engaged position to the disengaged position. At this time, when the rotation member 35 rotates toward the disengaged position, the projecting locking portion 37 slides inside the elongate hole 35h toward the other end portion, so that the connection opening 20A and the input connector 14B (or the connection opening 21A and the output connector 14C) separate from each other. When the rotation member 35 is placed at the disengaged position and the projecting locking portion 37 is pulled out of the elongate hole 35h, the connection opening 20A and the input connector 14B (or the connection opening 21A and the output connector 14C) are disconnected from each other.

Thus, the rotation member 35 is configured to rotate between the engaged position to be engaged with the input connector 14B and the disengaged position to be disengaged from the input connector 14B.

The slide member 36 is configured to slide between a holding position where the rotation member 35 is held at the engaged position and a non-holding position where the rotation member 35 is not held at the engaged position. As illustrated in FIG. 9, when the operator slides the slide member 36 in a direction of an arrow illustrated in FIG. 9, the rotation member 35 is engaged with the slide member 36, so that the rotation member 35 is not rotatable while the rotation member 35 is held at the engaged position. The position of the slide member 36 at this time is the holding position.

In the meantime, when the operator slides the slide member 36 in a direction opposite to the direction of the arrow illustrated in FIG. 9, the rotation member 35 is disengaged from the slide member 36, so that the rotation member 35 is rotatable to the disengaged position. The position of the slide member 36 at this time is the non-holding position.

### [Vibration Isolation Structure of Bus Bar in Inverter]

As described above, the inverter 14 includes the first conductive section 43 and the second conductive section 44. The first conductive section 43 includes two bus bars 43A, 43B for providing a direct current from the input connector 14B to the capacitor 41. The second conductive section 44 includes three bus bars 44A, 44B, 44C for providing an alternating current from the inverter module 42 to the output connector 14C. The bus bar 43A, 43B, 44A, 44B, 44C is constituted by a metal flat plate having an elongated shape. The bus bars 43A, 43B, 44A, 44B, 44C has opposite ends in its longitudinal direction which opposite ends are fixed by bolt.

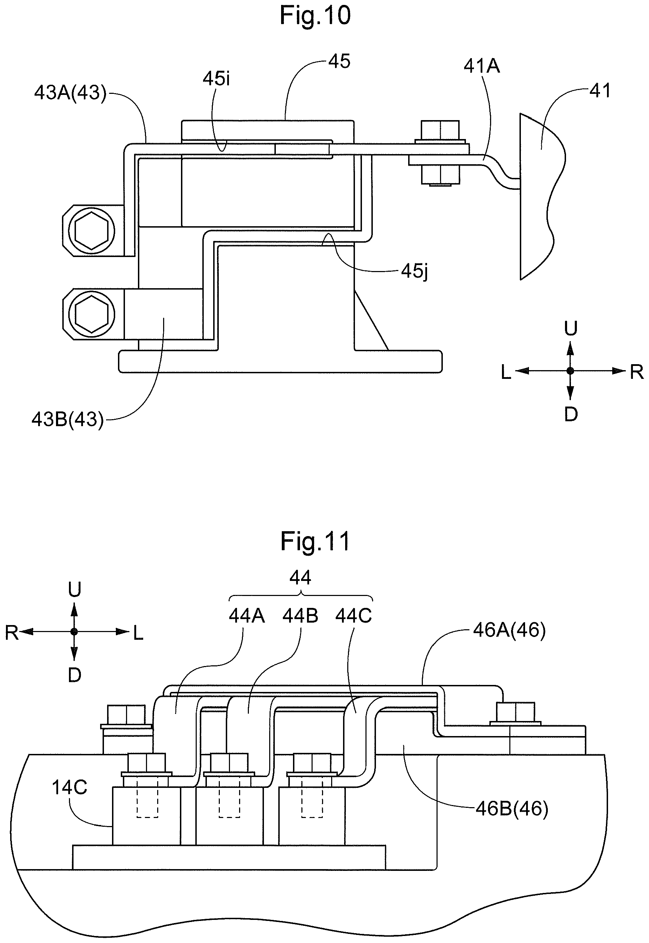

As illustrated in FIGS. 6, 10, the bus bar 43A, 43B in the first conductive section 43 is connected by bolt to the input connector 14B and a terminal 41A, 41B of the capacitor 41. As illustrated in FIGS. 6, 11, the bus bar 44A, 44B, 44C in the second conductive section 44 is connected by bolt to the output connector 14C and the inverter module 42.

The input connector 14B and the output connector 14C project outwardly from corresponding outer surface portions of the case 14A. Accordingly, it is conceivable that when vibration occurs, the vibration of each of the input connector 14B and the output connector 14C tends to become larger than the vibration of the case 14A. In this case, the vibration of the input connector 14B is transmitted to the bus bars 43A, 43B, and the vibration of the output connector 14C is transmitted to the bus bars 44A, 44B, 44C.

The bus bar 43A, 43B, 44A, 44B, 44C is constituted by a metal flat plate having an elongated shape. Accordingly, it is conceivable that, when resonance occurs in the bus bar 43A, 43B, 44A, 44B, 44C, for example, a central portion of the metal plate in its longitudinal direction vibrates more largely than bolt connected portions in the opposite ends thereof. It is also conceivable that, due to this vibration, bolts in the bolt connected portions are loosened. In order to avoid such an inconvenience, in the present embodiment, vibration isolators 45, 46 are provided as illustrates in FIGS. 6, 11, 12.

The vibration isolator 45 restrains the vibration of the bus bar 43A, 43B in the first conductive section 43, and the vibration isolator 46 restrains the vibration of the bus bar 44A, 44B, 44C in the second conductive section 44. The vibration isolator 45, 46 is constituted by a non-conductive insulator.

As illustrated in FIG. 11, the vibration isolator 45 includes two grooves 45i, 45j. The groove 45i, 45j is formed to have a groove width corresponding to the thickness of the bus bar 43A, 43B and is also formed to be deeper than the width (the length in a short direction) of the bus bar 43A, 43B. The central portion of the bus bar 43A in its longitudinal direction is inserted into the groove 45i, and the central portion of the bus bar 43B in its longitudinal direction is inserted into the groove 45j. The vibration isolator 45 is fixed to the case 14A by bolt.

The opposite ends of the bus bar 43A, 43B in the longitudinal direction are placed outside the groove 45i, 45j. That is, the opposite ends of the bus bar 43A, 43B are connected to the input connector 14B and the terminal 41A, 41B, respectively, and the central portion of the bus bar 43A, 43B in the longitudinal direction is sandwiched by the groove 45i, 45j of the vibration isolator 45. This can avoid such a risk that the central portion of the bus bar 43A, 43B in the longitudinal direction vibrates more largely than the opposite ends thereof. Consequently, this largely reduces such a risk that bolts fastened in the opposite ends of the bus bar 43A, 43B are loosened.

In the present embodiment, as illustrated in FIG. 12, the vibration isolator 46 includes two bar-shaped bodies 46A, 46B that can collectively sandwich the bus bars 44A, 44B, 44C. The two bar-shaped bodies 46A, 46B sandwich respective central portions of the bus bars 44A, 44B, 44C in their longitudinal direction, in a central region of the two bar-shaped bodies 46A, 46B in their longitudinal direction. The two bar-shaped bodies 46A, 46B have respective opposite ends in the longitudinal direction which respective opposite ends are connected by bolt. This avoids such a risk that the central portions of the bus bars 44A, 44B, 44C in the longitudinal direction vibrate more largely than the opposite ends of the bus bars 44A, 44B, 44C. Consequently, this largely reduces such a risk that bolts fastened in the opposite ends of the bus bars 44A, 44B, 44C are loosened.

### [Alternative Embodiments]

The present invention is not limited to the configuration described in the above embodiment, and the following describes alternative embodiments of the present invention.
(1) In the above embodiment, the motor M rotates the travel device and the operation mechanism, but the present invention is not limited to this embodiment. The motor M may be configured to rotate either one of the travel device and the operation mechanism.
(2) In the above embodiment, the drive battery 4 and the inverter 14 are adjacent to each other in the up-down direction, but the present invention is not limited to this embodiment. For example, the drive battery 4 and the inverter 14 may be adjacent to each other in the front-rear direction, or the drive battery 4 and the inverter 14 may be adjacent to each other in the right-left direction.
(3) In the above embodiment, the inverter 14 and the motor M are disposed to be adjacent to each other in the front-rear direction, but the present invention is not limited to this embodiment. For example, the inverter 14 and the motor M may be disposed to be adjacent to each other in the up-down direction, or the inverter 14 and the motor M may be disposed to be adjacent to each other in the right-left direction. In the above embodiment, the inverter 14 and the motor M are disposed to be aligned with each other along the front-rear direction, but the present invention is not limited to this embodiment. For example, the inverter 14 and the motor M may be disposed to be aligned with each other along the up-down direction, or the inverter 14 and the motor M may be disposed to be aligned with each other along the right-left direction. Alternatively, the inverter 14 and the motor M may not be adjacent to each other.
(4) In the above embodiment, the output connector 14C and the power receiving connector 22 are displaced from each other in the right-left direction when the body is viewed in the front-rear direction, but the present invention is not limited to this embodiment. For example, the output connector 14C and the power receiving connector 22 may be displaced from each other in the up-down direction when the body is viewed in the front-rear direction. Alternatively, the output connector 14C and the power receiving connector 22 may not be displaced from each other when the body is viewed in the front-rear direction.
(5) In the above embodiment, the rotation member 35 and the slide member 36 in the connection opening 20A of the power cable 20 are provided as the first locking mechanism, but the present invention is not limited to this embodiment. For example, the input connector 14B may include the rotation member 35 and the slide member 36 as the first locking mechanism. That is, at least one of the input connector 14B and the connection opening 20A of the power cable 20 may include the first locking mechanism for holding the connection between the input connector 14B and the power cable 20.
(6) In the above embodiment, the rotation member 35 and the slide member 36 in the connection opening 21A of the feeder cable 21 are provided as the second locking mechanism, but the present invention is not limited to this embodiment. For example, the output connector 14C may include the rotation member 35 and the slide member 36 as the second locking mechanism. That is, at least one of the output connector 14C and the connection opening 21A of the feeder cable 21 may include the second locking mechanism for holding the connection between the output connector 14C and the feeder cable 21.
(7) The two bar-shaped bodies 46A, 46B may be configured to sandwich the bus bars 43A, 43B in the first conductive section 43. That is, the vibration isolator 46 should include the two bar-shaped bodies 46A, 46B that collectively sandwich a plurality of bus bars.
(8) Further, the vibration isolator 45 may include a groove in addition to the grooves 45i, 45j. The three bus bars 44A, 44B, 44C in the second conductive section 44 may be inserted into a plurality of grooves in the vibration isolator 45 and sandwiched by the vibration isolator 45. That is, the vibration isolator 45 should include a plurality of grooves necessary for the vibration isolator 45 to sandwich a plurality of bus bars.
(9) In the above embodiment, the mowing device 19 is provided as the work device, but the present invention is not limited to this embodiment. For example, the work device may be a cultivator, a sowing device, a planter, a fertilizing device, a leaf cutting device, a spraying device, a ridging device, a bailer, a rotary rake, a tedder, or the like.
(10) In the above embodiment, an electric tractor is described as the electric work vehicle, but the present invention is not limited to this embodiment. For example, the electric work vehicle may be an electric rice transplanter, an electric applicator, an electric sprayer, an electric combine, an electric mower, an electric wheel loader, an electric backhoe, or the like.

The configurations described in the above embodiment (including the alternative embodiments; the same applies hereinafter) can be applied in combination with configurations of other embodiments as long as no inconsistency occurs. Further, the embodiment disclosed in the present specification is just an example. The embodiment of the present invention is not limited to this, and various modifications can be made within a range that does not deviate from the object of the present invention.

### Industrial Applicability

The present invention can be applied to an electric work vehicle including an inverter configured to convert a direct current from a battery into an alternating current and supply the alternating current to a motor.

### Description of Reference Numerals

2: body frame
2A: front-rear frames (right and left body frames)
2B: lateral frame
4: drive battery (battery)
10: front wheel (travel device)
11: rear wheel (travel device)
14: inverter
14A: case
14B: input connector (third connector)
14C: output connector (first connector)
17: middle PTO shaft (operation mechanism)
18: rear PTO shaft (operation mechanism)
19: mowing device (work device)
20: power cable (first electrically-conductive cable)
20A: connection opening
21: feeder cable (second electrically-conductive cable)
21A: connection opening
22: power receiving connector (second connector)
35: rotation member (first rotation mechanism, second rotation mechanism, first locking mechanism, second locking mechanism)
36: slide member (first slide mechanism, second slide mechanism, first locking mechanism, second locking mechanism)
42: inverter module
43: first conductive section 43
43A: bus bar
43B: bus bar
44: second conductive section
44A: bus bar
44B: bus bar
44C: bus bar
45: vibration isolator
45i: groove
45j: groove
46: vibration isolator
46A: bar-shaped body
46B: bar-shaped body
M: motor

## Claims

1. An electric work vehicle, comprising:
a body;
a travel device configured to cause the body to travel;
an operation mechanism configured to transmit power to a work device;
a motor configured to rotate at least one of the travel device and the operation mechanism;
a battery configured to supply electric power to the motor;
an inverter configured to convert a direct current from the battery into an alternating current and supply the alternating current to the motor; and
an electrically-conductive cable electrically connected to the inverter and the motor to provide the alternating current to the motor,
the inverter including
an inverter module configured to convert the direct current into the alternating current,
a case containing the inverter module, and
a first connector projecting outwardly from a surface portion of the case and electrically connected to the electrically-conductive cable,
the battery and the inverter being disposed adjacent to each other,
the first connector being provided on the surface portion of the case which surface portion is on an opposite side to a side where the battery is placed, in such a manner as to project toward the opposite side.

2. The electric work vehicle according to claim 1, wherein
the inverter and the motor are disposed adjacent to each other, and
the first connector is placed on a region of the case which region is opposite to a side where the motor is placed.

3. The electric work vehicle according to claim 1 or 2, wherein
the motor includes a second connector connected to the electrically-conductive cable, and
the first connector and the second connector are disposed to face each other.

4. The electric work vehicle according to claim 3, wherein
the inverter and the motor are aligned along a front-rear direction of the body;
the first connector and the second connector are disposed at respective positions displaced from each other in a right-left direction when the body is viewed in the front-rear direction; and
the first connector is provided to be inclined from the front-rear direction of the body toward a side where the second connector is placed.

5. The electric work vehicle according to any one of claims 1 to 4, wherein
the body includes right and left body frames extending in a front-rear direction of the body,
the battery is right above the inverter and supported on the right and left body frames,
the motor and the inverter are aligned along the front-rear direction of the body between the right and left body frames and supported on the right and left body frames, and
the electrically-conductive cable is stored in a space between the right and left body frames.

6. The electric work vehicle according to claim 5, wherein
the inverter is supported on the right and left body frames in such a manner as to be attachable to and detachable from the right and left body frames.

7. The electric work vehicle according to claim 5 or 6, wherein
the body includes a lateral frame connecting the right and left body frames to each other, and
the electrically-conductive cable is placed above the lateral frame.

8. The electric work vehicle according to claim 7, wherein
the inverter is placed in front of the motor,
the lateral frame is connected to respective lower portions of the right and left body frames, and
the lateral frame extends in the front-rear direction from a region corresponding to a front end portion of the inverter to a region corresponding to a front end portion of the motor in a plan view.

9. An electric work vehicle, comprising:
a body;
a travel device configured to cause the body to travel;
an operation mechanism configured to transmit power to a work device;
a motor configured to rotate at least one of the travel device and the operation mechanism;
a battery configured to supply electric power to the motor;
an inverter configured to convert a direct current from the battery into an alternating current and supply the alternating current to the motor;
a first electrically-conductive cable electrically connected to the battery and the inverter to provide the direct current to the inverter; and
a second electrically-conductive cable electrically connected to the inverter and the motor to provide the alternating current to the motor,
the inverter including
a third connector electrically connected to the first electrically-conductive cable,
an inverter module configured to convert the direct current into the alternating current, and
a first connector electrically connected to the second electrically-conductive cable,
at least one of the third connector and a connection opening of the first electrically-conductive cable including a first locking mechanism configured to maintain connection between the third connector and the first electrically-conductive cable,
at least one of the first connector and a connection opening of the second electrically-conductive cable including a second locking mechanism configured to maintain connection between the first connector and the second electrically-conductive cable.

10. The electric work vehicle according to claim 9, wherein
the first locking mechanism includes
a first rotation mechanism provided in one of the third connector and the connection opening of the first electrically-conductive cable and configured to rotate between an engaged position at which the third connector is engaged with the connection opening of the first electrically-conductive cable and a disengaged position at which the third connector is disengaged from the connection opening of the first electrically-conductive cable, and
a first slide mechanism configured to slide between a holding position at which the first rotation mechanism is held at the engaged position and a non-holding position at which the first rotation mechanism is not held at the engaged position, and
the second locking mechanism includes
a second rotation mechanism provided in one of the first connector and the connection opening of the second electrically-conductive cable and configured to rotate between an engaged position at which the first connector is engaged with the connection opening of the second electrically-conductive cable and a disengaged position at which the first connector is disengaged from the connection opening of the second electrically-conductive cable, and
a second slide mechanism configured to slide between a holding position at which the second rotation mechanism is held at the engaged position and a non-holding position at which the second rotation mechanism is not held at the engaged position.

11. The electric work vehicle according to claim 9 or 10, wherein
the inverter and the motor are aligned along a front-rear direction of the body,
the motor includes a second connector connected to the second electrically-conductive cable,
the first connector and the second connector are disposed to face each other at respective positions displaced from each other in a right-left direction when the body is viewed in the front-rear direction, and
the first connector is provided to be inclined from the front-rear direction of the body toward a side where the second connector is placed.

12. The electric work vehicle according to any one of claims 9 to 11, wherein
the inverter includes
a first conductive section including a plurality of bus bars via which the direct current flows from the third connector to the inverter module,
a second conductive section including a plurality of bus bars via which the alternating current flows from the inverter module to the first connector, and
a vibration isolator configured to restrain vibration of the plurality of bus bars of each of the first conductive section and the second conductive section.

13. The electric work vehicle according to claim 12, wherein
the vibration isolator is made of a non-conductive insulator.

14. The electric work vehicle according to claim 13, wherein
the vibration isolator includes a plurality of grooves allowing the vibration isolator to sandwich the plurality of bus bars.

15. The electric work vehicle according to claim 13 or 14, wherein
the vibration isolator includes two bar-shaped bodies configured to collectively sandwich the plurality of bus bars.
